# EUROPÄISCHE PATENTSCHRIFT

(11) **EP 1 512 787 B1**
(45) Veröffentlichungstag und Bekanntmachung des Hinweises auf die Patenterteilung: **08.10.2008**
(21) Anmeldenummer: 04103604.7
(22) Anmeldetag: 28.07.2004
(51) Int. Cl.: D21F 1/40, D21G 1/02

(54) **Breitstreckwalze**
Spreading roller
Rouleau élargisseur

(30) Priorität: 05.09.2003 DE 10341119
(43) Veröffentlichungstag der Anmeldung: 09.03.2005
(60) Teilanmeldung: 08000366.8
(73) Patentinhaber: Voith Patent GmbH, 89522 Heidenheim (DE)
(72) Erfinder: Schneid, Josef, 88267, Vogt (DE)
(74) Vertreter: Manitz, Gerhart

(56) Entgegenhaltungen:
- EP-A- 0 932 723
- WO-A-99/09329
- DE-A1- 10 153 693

## Beschreibung

Die Erfindung betrifft eine Breitstreckwalze für eine Maschine zur Herstellung einer Materialbahn, insbesondere Papier- oder Kartonbahn, gemäß dem Oberbegriff des Anspruchs 1. Eine Breitstreckwalze dieser Art ist in der WO 99/09329 A beschrieben.

Insbesondere bei der Herstellung von Papier- oder Kartonbahnen werden zum Breitstrecken der jeweiligen Bahn Walzen verwendet, die eine bestimmte Durchbiegung oder Krümmung aufweisen.

Eine aus der EP 0 932 723 B1 bekannte Breitstreckwalze umfasst ein gleichförmiges Walzenrohr, in das zwei axial voneinander beabstandete Lager eingesetzt sind. Durch Ablenkung der beiden Lager wird das Walzenrohr durchgebogen bzw. gekrümmt, so dass die über die Breitstreckwalze geführte Papierbahn eine Breitstreckwirkung erfährt. Ein gleichförmiger Biegeträger erfährt nun aber nur bei einem gleichmäßigen Biegemoment auch eine gleichmäßige Krümmung über seine gesamte Länge. Im vorliegenden Fall weist der Verlauf des Biegemoments an den Lagerstellen der beiden Lager angesichts der Einleitung von Querkräften jeweils eine Unstetigkeit auf, was zur Folge hat, dass sich auch eine ungleichförmige Krümmung einstellt.

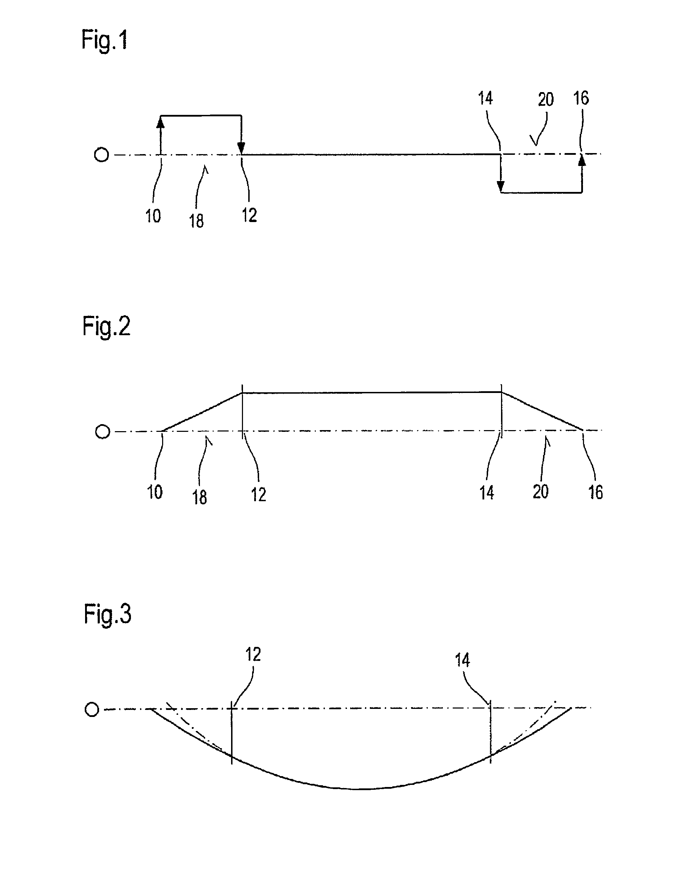

Der sich bei dieser aus der EP 0 932 723 B 1 bekannten Breitstreckwalze über die Walzenlänge ergebende Querkraftverlauf ist in der Fig. 1 der Zeichnung schematisch wiedergegeben. Dabei werden Querkräfte an den Lagerstellen 10, 12; 14, 16 der beiden Lager 18, 20 von innen in das Walzenrohr eingeleitet.

Fig. 2 zeigt den sich daraus ergebenden Biegeelementverlauf. Es ist zu erkennen, dass sich an den Lagerstellen 10, 12; 14, 16 der beiden Lager 18, 20 angesichts der Einleitung der genannten Querkräfte Unstetigkeiten ergeben.

Fig. 3 zeigt die daraus resultierende Biegelinie der bekannten Breitstreckwalze. Bei der so entstehenden Biegelinie nimmt die Krümmung axial außerhalb der Lagerstellen 12, 14 ab, was an den besonders wichtigen Bahnrändern zu einem Abfall der Breitstreckwirkung führt und demzufolge einen Faltenlauf mit sich bringt. Bei der bekannten Breitstreckwalze wird also durch Unstetigkeiten die Breitstreckwirkung negativ beeinflusst, und die Walze muss so breit gebaut werden, dass die betreffende Lagerstelle axial außerhalb des genutzten Bahnführungsbereichs liegt.

Bei der aus der WO 99/09329 A bekannten Breitstreckwalze sind sämtliche den Lagerträgern zugeordnete Lagerstellen außerhalb des Walzenrohres angeordnet.

Der Erfindung liegt die Aufgabe zugrunde, eine verbesserte Breitstreckwalze der eingangs genannten Art zu schaffen, bei der die zuvor genannten Nachteile des Standes der Technik beseitigt sind. Dabei soll insbesondere innerhalb des genutzten Bahnführungsbereichs eine gleichförmige Krümmung bei kompakten Breitenabmessungen erreicht werden.

Gemäß der Erfindung wird diese Aufgabe dadurch gelöst, dass die den Lagerträgern zugeordneten Lagerstellen zumindest teilweise innerhalb des Walzenrohres angeordnet sind.

Aufgrund dieser Ausbildung kann innerhalb des genutzten Bahnführungsbereichs des Walzenrohres bei kompakten Breitenabmessungen eine gleichförmige Krümmung erzielt werden. Zur Verbesserung der Breitstreckwirkung im Randbereich kann die Krümmung dort gegebenenfalls auch größer ausgeführt werden.

Die Lagerträger können insbesondere flanschartig ausgeführt sein.

Zweckmäßigerweise sind die den Lagerträgern zugeordneten Lagerstellen zur Einstellung der Krümmung des Walzenrohres entsprechend verstellbar. Die Verstellung kann über geeignete Kraftelemente erfolgen.

Bei einer bevorzugten praktischen Ausführungsform der erfindungsgemäßen Breitstreckwalze sind einem jeweiligen Lagerträger jeweils wenigstens zwei Lagerstellen zugeordnet. Dabei sind die Lagerstellen eines jeweiligen Lagerträgers zur Einstellung der Krümmung des Walzenrohres zweckmäßigerweise aus einer neutralen Lage um eine gemeinsame Achse verschwenkbar.

Ist die Steifigkeit des Walzenrohres über dessen gesamte Länge gleichförmig, so ergibt sich angesichts der Einleitung der Biegemomente über die stirnseitigen Walzenrohrenden ein gleich bleibender Verlauf des Biegemomentes über die gesamte Länge des Walzenrohres. Entsprechend ist auch die Krümmung über die gesamte Rohrlänge gleichförmig und ohne Abfall im Randbereich.

Ist die Steifigkeit des Walzenrohres über dessen Länge dagegen ungleichförmig und zu den Walzenrohrenden hin abfallend, so steigt die Krümmung zu den Walzenenden hin an, was sich günstig auf die Breitstreckwirkung im Randbereich der Materialbahn auswirkt.

Bei einer bevorzugten praktischen Ausführungsform der erfindungsgemäßen Breitstreckwalze entspricht ein jeweiliger Endbereich abfallender Steifigkeit bis etwa einem Drittel der Gesamtlänge des Walzenrohres.

Das Walzenrohr kann beispielsweise aus faserverstärktem Kunststoff bestehen. Insbesondere in diesem Fall kann die Steifigkeit des Walzenrohres zumindest teilweise durch entsprechend veränderte Materialeigenschaften eingestellt sein.

Das Walzenrohr kann beispielsweise aber auch aus einem homogenen Material wie zum Beispiel Metall oder dergleichen bestehen. Insbesondere in diesem Fall kann die Steifigkeit des Walzenrohres zumindest teilweise durch entsprechend veränderte geometrische Abmessungen eingestellt sein.

Die zumindest teilweise innerhalb des Walzenrohres angeordneten Lagerträger umfassen vorzugsweise jeweils einen sich allgemein axial ins Innere des Walzenrohres erstreckenden Rohransatz, wobei die Lagerstellen radial innen am Rohransatz vorgesehen sind.

Bevorzugt sind die Lagerträger über die Lagerstellen jeweils auf einem Walzenabstützelement drehbar gelagert, das zur Einstellung der Krümmung des Walzenrohres um eine Schwenkachse entsprechend verschwenkbar ist.

Es sind beispielsweise auch solche Ausführungen denkbar, bei denen die Lagerträger über die Lagerstellen jeweils auf einem feststehenden Walzenabstützelement drehbar gelagert und die Lagerstellen zur Einstellung der Krümmung des Walzenrohres bezüglich des feststehenden Walzenabstützelements um eine gemeinsame Schwenkachse verschwenkbar sind.

Einem jeweiligen Lagerträger können insbesondere auch zumindest zwei in unterschiedlichen Radiallagen vorgesehene Lagerstellen zugeordnet sein.

Die Erfindung wird im Folgenden anhand von Ausführungsbeispielen unter Bezugnahme auf die Zeichnung näher beschreiben; in dieser zeigen:
- Fig. 1: den sich über die Länge einer aus der EP 0 932 723 B 1 bekannten Breitstreckwalze ergebenden Querkraftverlauf,
- Fig. 2: den sich über die Länge der aus der EP 0 932 723 B 1 bekannten Breitstreckwalze ergebenden Biegemomentverlauf,
- Fig. 3: die sich für die aus der EP 0 932 723 B 1 bekannte Breitstreckwalze ergebende Biegelinie,
- Fig. 4: eine schematische Teildarstellung einer Lediglich der näheren Erläuterung dienenden, jedoch nicht zur Erfindung gehörenden Ausführungsform einer Breitstreckwalze, bei der die Biegemomente ausschließlich über die stirnseitigen Walzenrohrenden eingeleitet werden und bei der die Lagerstellen außerhalb des Walzenrohres angeordnet sind,
- Fig. 5: eine schematische Teildarstellung einer Ausführungsform der erfindungsgemäßen Breitstreckwalze, bei der die Biegemomente ausschließlich über die stirnseitigen Walzenrohrenden eingeleitet werden, wobei die Lagerstellen im vorliegenden Fall jedoch innerhalb des Walzenrohres angeordnet sind,
- Fig. 6: eine schematische Teildarstellung einer Walzenausführungsform der erfindungsgemäßen Breitstreckwalze, bei der die Biegemomente ausschließlich über die stirnseitigen Walzenrohrenden eingeleitet werden, wobei im vorliegenden Fall einem jeweiligen Lagerträger zwei in unterschiedlichen Radiallagen vorgesehene Lagerstellen zugeordnet sind, und
- Fig. 7: eine schematische Darstellung eines einem jeweiligen Lagerträger der Breitstreckwalze gemäß Fig. 6 zugeordneten radial verschiebbaren Führungsringes zum Verstellen der Lagerstellen.

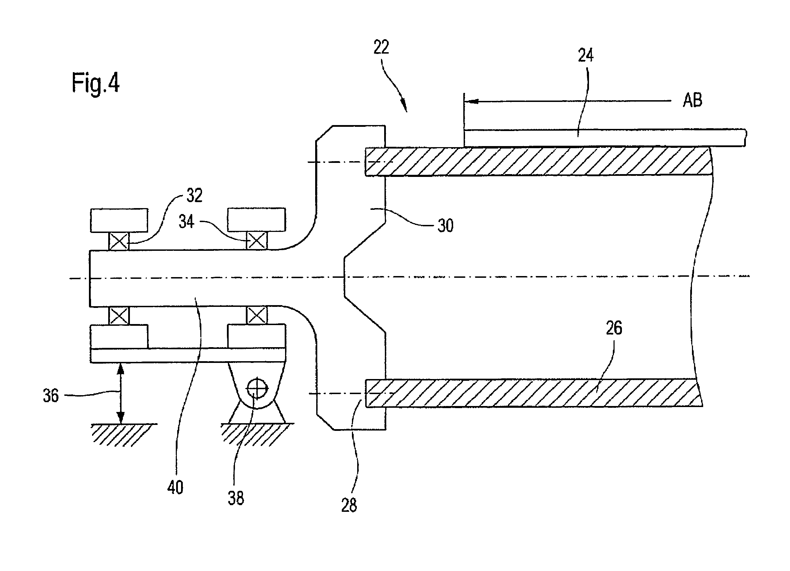

Fig. 4 zeigt in schematischer Darstellung eine Lediglich der näheren Erläuterung dienenden, jedoch nicht zur Erfindung gehörenden Ausführungsform einer Breitstreckwalze 22 für eine Maschine zur Herstellung einer Materialbahn 24, bei der es sich insbesondere um eine Papier- oder Kartonbahn handeln kann.

Die Breitstreckwalze 22 umfasst ein Walzenrohr 26, dem Mittel zur Einleitung von Biegemomenten zugeordnet sind, wobei im vorliegenden Fall die Biegemomente ausschließlich über die stirnseitigen Enden 28 des Walzenrohres 26 eingeleitet werden.

Die Mittel zur Einleitung von Biegemomenten umfassen den stirnseitigen Enden 28 des Walzenrohres 26 zugeordnete Lagerträger 30. Dabei sind diese insbesondere flanschartigen Lagerträger 30 fest mit den stirnseitigen Walzenrohrenden 28 verbunden. Zur Einstellung der Krümmung des Walzenrohres 26 sind die den Lagerträgern 30 zugeordneten Lagerstellen 32, 34 entsprechend verstellbar. Die Verstellung der Lagerstellen 32, 34 erfolgt über Kraftelemente 36.

Wie anhand der Fig. 4 zu erkennen ist, sind im vorliegenden Fall einem jeweiligen Lagerträger 30 jeweils zwei axial beabstandete Lagerstellen 32, 34 zugeordnet. Dabei sind die Lagerstellen 32, 34 eines jeweiligen Lagerträgers 30 zur Einstellung der Krümmung des Walzenrohres 26 aus einer neutralen Lage um eine gemeinsame Schwenkachse 38 verschwenkbar.

Wie anhand der Fig. 4 zu erkennen ist, sind die den Lagerträgern 30 zugeordneten Lagerstellen 32, 34 im vorliegenden Fall axial außerhalb des Walzenrohres 26 angeordnet. Dabei umfassen die Lagerträger 30 jeweils einen allgemein axial nach außen weisenden Ansatz 40, auf dessen radial außen liegender Seite die Lagerstellen 32, 34 vorgesehen sind.

Das Walzenrohr 26 ist also an seinen stirnseitigen Enden 28 jeweils mit einem flanschartigen Lagerträger 30 fest verbunden. Die für einen jeweiligen Lagerträger 30 vorgesehenen zwei Lagerstellen 32, 34 können durch geeignete Kraftelemente 36 um eine gemeinsame Schwenkachse 38 aus einer neutralen Lage abgelenkt werden und ermöglichen damit eine einstellbare Krümmung des Walzenrohres 26.

Die Biegemomente werden jeweils am Ende des Walzenrohres 26 eingeleitet, so dass ein gleich bleibender Verlauf des Biegemoments über die gesamte Länge des Walzenrohres 26 erreicht wird. Entsprechend ist auch die Krümmung über die gesamte Länge des Walzenrohres 26 gleichförmig und ohne Abfall im Randbereich.

Wählt man die Steifigkeit des Walzenrohres 26 über dessen Länge nicht gleichförmig, sondern zu den Enden hin abfallend, so steigt die Krümmung zu den Enden des Walzenrohres 26 hin an, was sich günstig auf die Breitstreckwirkung im Randbereich der Materialbahn 24 auswirkt. Dieser Randbereich kann beispielsweise jeweils bis etwa ein Drittel der Länge des Walzenrohres 26 betragen.

Insbesondere bei Rohrkörpern aus faserverstärkten Kunststoffen kann die Veränderung der Materialeigenschaften zum Einstellen der Steifigkeit herangezogen werden. Bei Rohrkörpern aus homogenen Materialien, zum Beispiel Metallen, wird die Steifigkeit durch eine entsprechende Veränderung der geometrischen Abmessungen angepasst.

Es kann also insbesondere eine Breitstreckwalze 22 mit innerhalb des genutzten Bahnführungsbereichs AB gleichförmiger Krümmung bei kompakten Breitenabmessungen verwirklicht werden, wobei zur Verbesserung der Breitstreckwirkung im Randbereich die Krümmung dort auch größer ausgeführt werden kann.

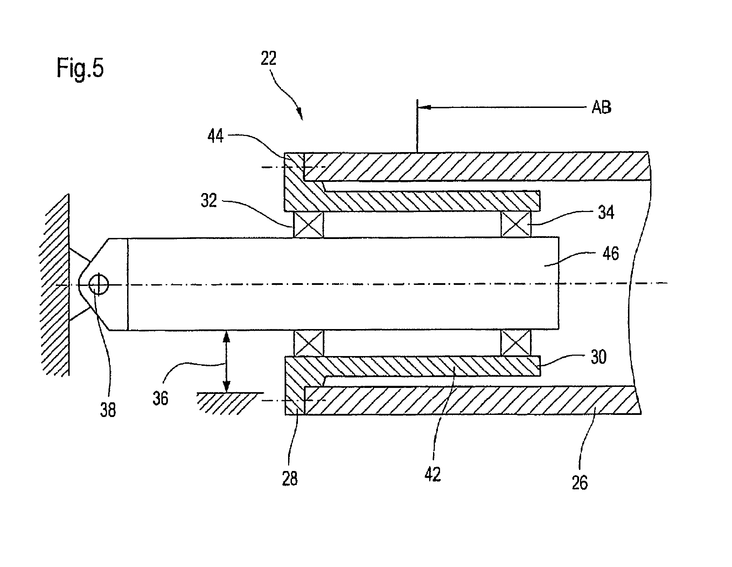

Während bei der Ausführungsform gemäß Fig. 4 die Lagerstellen 32, 34 axial außerhalb des Walzenrohres 26 vorgesehen sind, sind diese Lagerstellen 32, 34 bei der in der Fig. 5 wiedergegebenen Ausführungsform der erfindungsgemäßen Breitstreckwalze 22 axial innerhalb des Walzenrohres 26 angeordnet. Auch im vorliegenden Fall werden die Biegemomente wieder ausschließlich über die stirnseitigen Walzenrohrenden 28 eingeleitet.

Wie anhand der Fig. 5 zu erkennen ist, umfassen die Lagerträger 30 im vorliegenden Fall jeweils einen sich allgemein axial ins Innere des Walzenrohres 26 erstreckenden Rohransatz 42, der an seinem äußeren Ende mit einem Bund 44 versehen ist, über den er fest mit dem betreffenden stirnseitigen Walzenrohrende 28 verbunden ist. Die Lagerstellen 32, 34 sind radial innen am Rohransatz 42 vorgesehen.

Die Lagerträger 30 sind über die Lagerstellen 32, 34 jeweils auf einem Walzenabstützelement 46 drehbar gelagert. Zur Einstellung der Krümmung des Walzenrohres 26 sind diese Walzenabstützelemente 46 jeweils um eine Schwenkachse 38 entsprechend verschwenkbar. Das Verschwenken kann wieder über Kraftelemente 36 erfolgen.

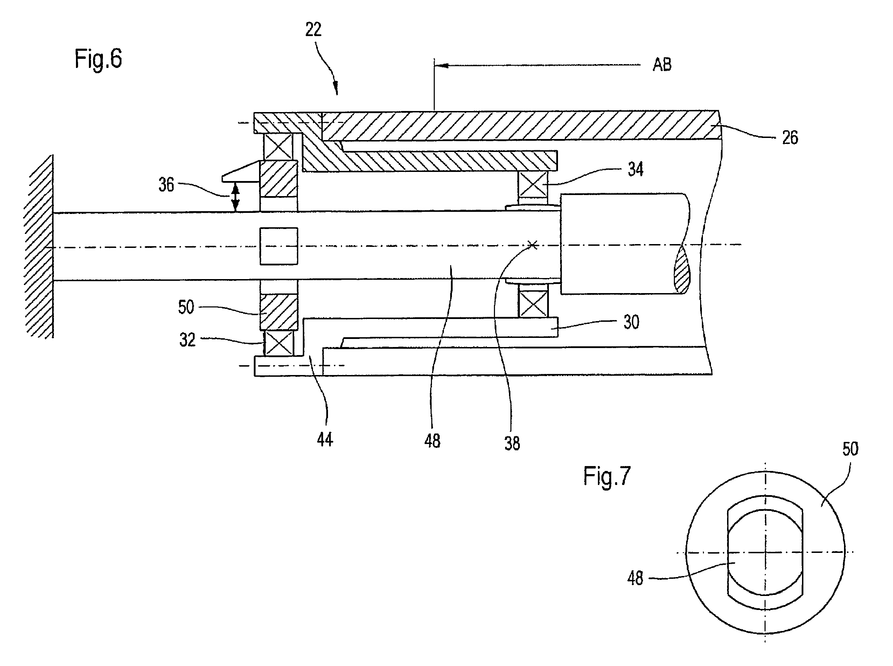

Fig. 6 zeigt in schematischer Darstellung eine weitere Ausführungsform der erfindungsgemäßen Breitstreckwalze 22 mit stirnseitiger Einleitung der Biegemomente. Im vorliegenden Fall sind die Lagerträger 30 über die Lagerstellen 32, 34 jeweils auf einem feststehenden Walzenabstützelement 48 drehbar gelagert. Zur Einstellung der Krümmung des Walzenrohres 26 sind die Lagerstellen 32, 34 bezüglich des feststehenden Walzenabstützelements 48 um eine im Bereich der axial inneren Lagerstelle 34 definierte gemeinsame Schwenkachse 38 verschwenkbar.

Wie anhand der Fig. 6 zu erkennen ist, sind im vorliegenden Fall einem jeweiligen Lagerträger 30 zwei in unterschiedlichen Radiallagen vorgesehene Lagerstellen 32, 34 zugeordnet.

Dabei liegt die axial äußere Lagerstelle 32 radial weiter außen als die axial innere Lagerstelle 34. Dazu ist der Lagerträger 30 an seinem axial äußeren Ende mit einer entsprechenden Querschnittserweiterung versehen, in deren Bereich die radial ebenfalls wieder innen am Lagerträger 30 liegende Lagerstelle 32 angeordnet ist. Im Bereich der Querschnittserweiterung besitzt der Lagerträger 30 einen Bund 44, über den er fest mit dem Walzenrohr 26 verbunden ist. Über die axial äußere Lagerstelle 32 ist das axial äußere Ende des Lagerträgers 30 schließlich drehbar auf dem radial verschiebbaren Führungsring 50 gelagert.

Fig. 7 zeigt in schematischer Darstellung einen einem jeweiligen Lagerträger 30 der Breitstreckwalze 22 gemäß Fig. 6 zugeordneten, radial auf dem Walzenabstützelement 48 verschiebbaren Führungsring 50 zum Verstellen der Lagerstellen 32, 34. Das entsprechende Verschieben des Führungsringes 30 kann wieder über ein oder mehrere Kraftelemente 36 erfolgen. Über den radial verschiebbaren Führungsring 50 wird die axial äußere Lagerstelle 32 entsprechend radial verstellt, wodurch das die beiden Lagerstellen 32, 34 umfassende Lager entsprechend um die im Bereich der axial inneren Lagerstelle 34 definierte Schwenkachse 38 verschwenkt wird.

### Bezugszeichenliste

- 10: Lagerstelle
- 12: Lagerstelle
- 14: Lagerstelle
- 16: Lagerstelle
- 18: Lager
- 20: Lager
- 22: Breitstreckwalze
- 24: Materialbahn
- 26: Walzenrohr
- 28: stirnseitiges Walzenrohrende
- 30: Lagerträger
- 32: Lagerstelle
- 34: Lagerstelle
- 36: Kraftelement
- 38: Schwenkachse
- 40: Ansatz
- 42: Rohransatz
- 44: Bund
- 46: Walzenabstützelement
- 48: Walzenabstützelement
- 50: Führungsring

- AB: genutzter Bahnführungsbereich

## Patentansprüche

1. Breitstreckwalze (22) für eine Maschine zur Herstellung einer Materialbahn (24), insbesondere Papier- oder Kartonbahn, mit einem Walzenrohr (26) und diesem zugeordneten Mitteln zur Einleitung von Biegemomenten, wobei die Biegemomente ausschließlich über die stirnseitigen Enden (28) des Walzenrohres (26) eingeleitet werden und die Mittel zur Einleitung von Biegemomenten den stirnseitigen Enden (28) des Walzenrohres (26) zugeordnete Lagerträger (30) umfassen, mit denen die stirnseitigen Walzenrohrenden (28) fest verbunden sind,
**dadurch gekennzeichnet,**
**dass** die den Lagerträgern (30) zugeordneten Lagerstellen (32, 34) zumindest teilweise innerhalb des Walzenrohres (26) angeordnet sind.

2. Breitstreckwalze nach Anspruch 1,
**dadurch gekennzeichnet,**
**dass** die Lagerträger (30) flanschartig ausgeführt sind.

3. Breitstreckwalze nach Anspruch 1 oder 2,
**dadurch gekennzeichnet,**
**dass** die den Lagerträgern (30) zugeordneten Lagerstellen (32, 34) zur Einstellung der Krümmung des Walzenrohres (26) entsprechend verstellbar sind.

4. Breitstreckwalze nach Anspruch 3,
**dadurch gekennzeichnet,**
**dass** die Lagerstellen (32, 34) über Kraftelemente (36) verstellbar sind.

5. Breitstreckwalze nach einem der vorhergehenden Ansprüche,
**dadurch gekennzeichnet,**
**dass** einem jeweiligen Lagerträger (30) jeweils wenigstens zwei Lagerstellen (32, 34) zugeordnet sind.

6. Breitstreckwalze nach Anspruch 5,
**dadurch gekennzeichnet,**
**dass** die Lagerstellen (32, 34) eines jeweiligen Lagerträgers (30) zur Einstellung der Krümmung des Walzenrohres (26) aus einer neutralen Lage um eine gemeinsame Schwenkachse (38) verschwenkbar sind.

7. Breitstreckwalze nach einem der vorhergehenden Ansprüche,
**dadurch gekennzeichnet,**
**dass** die Steifigkeit des Walzenrohres (26) über dessen gesamte Länge gleichförmig ist.

8. Breitstreckwalze nach einem der Ansprüche 1 bis 6,
**dadurch gekennzeichnet,**
**dass** die Steifigkeit des Walzenrohres (26) über dessen Länge ungleichförmig ist.

9. Breitstreckwalze nach Anspruch 8,
**dadurch gekennzeichnet,**
**dass** die Steifigkeit des Walzenrohres (26) zu den Walzenrohrenden (28) hin abfällt.

10. Breitstreckwalze nach Anspruch 9,
**dadurch gekennzeichnet,**
**dass** ein jeweiliger Endbereich abfallender Steifigkeit bis etwa einem Drittel der Gesamtlänge des Walzenrohres (26) entspricht.

11. Breitstreckwalze nach einem der vorhergehenden Ansprüche,
**dadurch gekennzeichnet,**
**dass** das Walzenrohr (26) aus faserverstärktem Kunststoff besteht.

12. Breitstreckwalze nach einem der vorhergehenden Ansprüche,
**dadurch gekennzeichnet,**
**dass** die Steifigkeit des Walzenrohres (26) zumindest teilweise durch entsprechend veränderte Materialeigenschaften eingestellt ist.

13. Breitstreckwalze nach einem der vorhergehenden Ansprüche,
**dadurch gekennzeichnet,**
**dass** das Walzenrohr (26) aus einem homogenen Material wie z.B. Metall besteht.

14. Breitstreckwalze nach einem der vorhergehenden Ansprüche,
**dadurch gekennzeichnet,**
**dass** die Steifigkeit des Walzenrohres (26) zumindest teilweise durch entsprechend veränderte geometrische Abmessungen eingestellt ist.

15. Breitstreckwalze nach einem der vorhergehenden Ansprüche,
**dadurch gekennzeichnet,**
**dass** die Lagerträger (30) jeweils einen sich allgemein axial ins Innere des Walzenrohres (26) erstreckenden Rohransatz (42) umfassen und die Lagerstellen (32, 34) radial innen am Rohransatz (42) vorgesehen sind.

16. Breitstreckwalze nach einem der vorhergehenden Ansprüche,
**dadurch gekennzeichnet,**
**dass** die Lagerträger (30) über die Lagerstellen (32, 34) jeweils auf einem Walzenabstützelement (46) drehbar gelagert sind, das zur Einstellung der Krümmung des Walzenrohres (26) um eine Schwenkachse (38) entsprechend verschwenkbar ist.

17. Breitstreckwalze nach einem der Ansprüche 1 bis 15,
**dadurch gekennzeichnet,**
**dass** die Lagerträger (30) über die Lagerstellen (32, 34) jeweils auf einem feststehenden Walzenabstützelement (48) drehbar gelagert und die Lagerstellen (32, 34) zur Einstellung der Krümmung des Walzenrohres (26) bezüglich des feststehenden Walzenabstützelements (48) um eine gemeinsame Schwenkachse (38) verschwenkbar sind.

18. Breitstreckwalze nach einem der vorhergehenden Ansprüche,
**dadurch gekennzeichnet,**
**dass** einem jeweiligen Lagerträger (30) zumindest zwei in unterschiedlichen Radiallagen vorgesehene Lagerstellen (32, 34) zugeordnet sind.

## Claims

1. A spreader roll (22) for a machine for the manufacture of a material web (24), in particular a paper web or a cardboard web, with a roll tube (26) and means associated with the roll tube for the introduction of bending moments, wherein the bending moments are exclusively introduced via the ends (28) of the roll tube (26) and the means for the introduction of bending moments includes the bearing supports (30) associated with the ends (28) of the roll tube (26), to which the roll tube ends (28) are fixedly connected,
**characterized in that**
the bearing locations (32, 34) associated with the bearing supports (30) are at least partially arranged in the roll tube (26).

2. A spreader roll according to claim 1,
**characterized in that**
the bearing supports (30) have a flange like design.

3. A spreader roll according to claim 1 or claim 2
**characterized in that**
the bearing locations (32, 34) associated with the bearing support (30) are adjustable for the adjustment of the curvature of the roll tube (26).

4. A spreader roll according to claim 3,
**characterized in that**
the bearing locations (32, 34) are adjustable via force elements (36).

5. A spreader roll according to any one of the preceding claims,
**characterized in that**
at least two bearing locations (32, 34) are associated with a respective bearing support (30).

6. A spreader roll according to claim 5,
**characterized in that**
the bearing locations (32, 34) of a respective bearing support (30) for the setting of the curvature of the roll tube (26) are pivotable from a neutral position around a common pivot axis (38).

7. A spreader roll according to any one of the preceding claims,
**characterized in that**
the stiffness of the roll tube (26) is uniform along its entire length.

8. A spreader roll according to claims 1 to 6,
**characterized in that**
the stiffness of the roll tube (26) is non-uniform over its length.

9. A spreader roll according to claim 8,
**characterized in that**
the stiffness of the roll tube (26) reduces towards the ends of the roll tube (28).

10. A spreader roll according to claim 9,
**characterised in that**
a respective end region of reducing stiffness corresponds to up to approximately a third of the total length region of the roll tube (26).

11. A spreader roll according to any one of the preceding claims,
**characterized in that**
the roll tube (26) consists of a fibre reinforced plastic.

12. A spreader roll according to any one of the preceding claims,
**characterized in that**
the stiffness of the roll tube (26) is at least partially achieved through correspondingly changed material properties.

13. A spreader roll according to any one of the preceding claims,
**characterized in that**
the roll tube (26) consists of a homogenous material such as a metal.

14. A spreader roll according to any one of the preceding claims,
**characterized in that**
the stiffness of the roll tube (26) is at least partially achieved through correspondingly changed geometrical dimensions.

15. A spreader roll according to any one of the preceding claims,
**characterized in that**
the bearing supports (30) include a tube stub (42) extending generally axially into the interior of the roll tube (26) and the bearing locations (32, 34) are provided radially inside the tube stub (42).

16. A spreader roll according to any one of the preceding claims,
**characterized in that**
the bearing supports (30) are respectively pivotally mounted via the bearing locations (32, 34) on a roll support element (46), which can be pivoted about a pivot axis (38) for the adjustment of the curvature of the roll tube (26).

17. A spreader roll according to any one of claims 1 to 15
**characterized in that**
the bearing supports (30) are respectively pivotally mounted via the
bearing locations (32, 34) on a stationary roll support element (48) and the bearing locations (32, 34) for the setting of the curvature of the roll tube (26) are pivotable with respect to the stationary roll support element (48) about a common pivot axis.

18. A spreader roll according to any one of the preceding claims,
**characterized in that**
at least two bearing locations (32, 34) in different radial positions are associated with a respective bearing support (30).

## Revendications

1. Rouleau élargisseur (22) pour une machine destinée à produire une bande de matériau (24), en particulier une bande de papier ou de carton, comprenant un tube de rouleau (26) et des moyens associés à celui-ci pour appliquer des couples de flexion, lesdits couples de flexion étant appliqués exclusivement via les extrémités frontales (28) du tube de rouleau (26), et les moyens pour appliquer des couples de flexion comprennent des porte-paliers (30) associés aux extrémités frontales (28) du tube de rouleau (26), avec lesquels les extrémités frontales (28) du tube de rouleau sont fermement reliées,
**caractérisé en ce que** les paliers (32, 34) associés aux porte-paliers (30) sont agencés au moins partiellement à l'intérieur du tube de rouleau (26).

2. Rouleau élargisseur selon la revendication 1,
**caractérisé en ce que** les porte-paliers (30) sont réalisés à la manière de brides.

3. Rouleau élargisseur selon la revendication 1 ou 2,
**caractérisé en ce que** les paliers (32, 34) associés aux portes-paliers (30) sont réglables de façon correspondante pour établir la courbure du tube de rouleau (26).

4. Rouleau élargisseur selon la revendication 3,
**caractérisé en ce que** les paliers (32, 34) sont réglables via des éléments à force (36).

5. Rouleau élargisseur selon l'une des revendications précédentes,
**caractérisé en ce qu'**au moins deux paliers (32, 34) sont associés à un porte-palier (30) respectif.

6. Rouleau élargisseur selon la revendication 5,
**caractérisé en ce que** les paliers (32, 34) d'un porte-palier (30) respectif sont capables de pivoter pour établir la courbure du tube de rouleau (26) depuis une position neutre autour d'un axe de pivotement commun (38).

7. Rouleau élargisseur selon l'une des revendications précédentes,
**caractérisé en ce que** la raideur du tube de rouleau (26) est régulière sur toute sa longueur.

8. Rouleau élargisseur selon l'une des revendications 1 à 6,
**caractérisé en ce que** la raideur du tube de rouleau (26) est irrégulière sur sa longueur.

9. Rouleau élargisseur selon la revendication 8,
**caractérisé en ce que** la raideur du tube de rouleau (26) diminue vers les extrémités (28) du tube de rouleau.

10. Rouleau élargisseur selon la revendication 9,
**caractérisé en ce qu'**une zone terminale respective à raideur décroissante correspond en environ à un tiers de la longueur totale du tube de rouleau (26).

11. Rouleau élargisseur selon l'une des revendications précédentes,
**caractérisé en ce que** le tube de rouleau (26) est en matière plastique renforcée par des fibres.

12. Rouleau élargisseur selon l'une des revendications précédentes,
**caractérisé en ce que** la raideur du tube de rouleau (26) est réglable au moins partiellement par variation correspondante des propriétés des matériaux.

13. Rouleau élargisseur selon l'une des revendications précédentes,
**caractérisé en ce que** le tube de rouleau (26) est en un matériau homogène, comme par exemple du métal.

14. Rouleau élargisseur selon l'une des revendications précédentes,
**caractérisé en ce que** la raideur du tube de rouleau (26) est réglable au moins partiellement par variation correspondante des dimensions géométriques.

15. Rouleau élargisseur selon l'une des revendications précédentes,
**caractérisé en ce que** les porte-paliers (30) comprennent respectivement un moignon tubulaire (42) qui s'étend généralement axialement vers l'intérieur du tube de rouleau (26), et les paliers (32, 34) sont prévus radialement à l'intérieur sur le moignon tubulaire (42).

16. Rouleau élargisseur selon l'une des revendications précédentes,
**caractérisé en ce que** les porte-paliers (30) sont montés via les paliers (32, 34) avec faculté de rotation sur un élément de soutien de rouleau (46) respectif, lequel est capable de pivoter de façon correspondante autour d'un axe de pivotement (38) pour établir la courbure du tube de rouleau (26).

17. Rouleau élargisseur selon l'une des revendications 1 à 15,
**caractérisé en ce que** les porte-paliers (30) sont montés via les paliers (32, 34) avec faculté de rotation sur un élément de soutien de rouleau (48) respectif stationnaire, et les paliers (32, 34) sont capables de pivoter autour d'un axe de pivotement commun (38) pour établir la courbure du tube de rouleau (26) par rapport à l'élément de soutien de rouleau (48) stationnaire.

18. Rouleau élargisseur selon l'une des revendications précédentes,
**caractérisé en ce qu'**au moins deux paliers (32, 34) prévus à des positions radiales différentes sont associés à un porte-palier (30) respectif.
